# EUROPÄISCHE PATENTSCHRIFT

(11) **EP 2 347 124 B1**
(45) Veröffentlichungstag und Bekanntmachung des Hinweises auf die Patenterteilung: **15.04.2015**
(21) Anmeldenummer: 09795404.4
(22) Anmeldetag: 16.12.2009
(51) Int. Cl.: F03D 11/00, F16B 37/06

(54) **Einrichtung zum Festlegen von Anbauteilen an einer Turminnenwand einer Windenergieanlage**
Device for fastening of attachment parts to an inside wall of a tower of a wind energy system
Dispositif de fixation des pièces rapportées sur la paroi intérieure du pylône d'un aérogénérateur

(30) Priorität: 19.11.2008 DE 102008058229
(43) Veröffentlichungstag der Anmeldung: 27.07.2011
(73) Patentinhaber: P.E. Concepts GmbH, 28359 Bremen (DE)
(72) Erfinder: UPHUES, Ulrich, 48431 Rheine (DE); MEESENBURG, Lorenz, 28203 Bremen (DE)
(74) Vertreter: Raffay & Fleck
(86) Internationale Anmeldenummer: PCT/EP2009/067262
(87) Internationale Veröffentlichungsnummer: WO 2010/058037

(56) Entgegenhaltungen:
- EP-A1- 1 060 826
- EP-B1- 1 623 116
- DE-A1- 10 107 231

## Beschreibung

### Technisches Gebiet

Die Erfindung betrifft eine Einrichtung zum Festlegen von Anbauteilen an einer metallenen Turminnenwand einer Windenergieanlage gemäß den Merkmalen des Oberbegriffes des Patentanspruches 1.

### Stand der Technik

Windenergieanlagen sind hoch errichtete Bauwerke, deren Strom erzeugende Komponenten am oberen Ende eines hoch aufragenden Turmes in einem dort angelagerten Maschinenhaus angeordnet sind. Nicht nur wegen der hohen Gewichtslasten der in den Maschinen angeordneten Komponenten, sondern auch wegen anderer Lasten, insbesondere des Staudruckes des anströmenden Windes, sind die Türme von Windenergieanlagen hohen Belastungen ausgesetzt. Dies gilt umso mehr, als dass moderne Windenergieanlagen mit immer höheren Leistungen größer dimensioniert und damit höher gebaut werden müssen.

Neben einer Bauweise, bei der der Turm einer Windenergieanlage in Stahlbetonbau aufgebaut wird, sind Türme von Windenergieanlagen häufig aus miteinander verschraubten oder in sonstiger Weise verbundenen ringförmigen Metallelementen, typischerweise Stahlelementen, gebildet. Im Inneren des Turmes müssen, z.B. um ein Begehen in verschiedenen Ebenen zu ermöglichen oder um Komponenten abzustützen, Anbauteile angeordnet und an der Turminnenwand festgelegt werden. Grundsätzlich wäre es denkbar und möglich, solche Festlegungen durch Anbringen von Öffnungen in der Turmwand und Hindurchführen von Schrauben, Nieten oder dgl. vorzunehmen oder Anbaukomponenten, wie etwa im Turminneren in verschiedenen Höhen anzubringende Plattformen unmittelbar mit der Turmwand zu verschweißen. Jedoch bringen insbesondere Öffnungen in der Turmwand, aber auch unmittelbare Schweißverbindungen mit größer dimensionierten Anbauelementen, wie etwa Plattformen, eine Schwächung der Turmwand im Bereich der Verbindungsstelle mit sich, die die Stabilität des Turmes insgesamt reduziert. Um eine solche Reduktion der Stabilität abzufangen und auszugleichen, müsste dann die Turmwand in entsprechend größerer Stärke ausgebildet werden, was nicht nur wegen der höheren Materialkosten, sondern auch wegen des erhöhten Gewichtes und der damit verbundenen Folgekosten beim Transport und der Aufstellung der Anlage sowie bei der Auslegung des Fundamentes und der dgl. unerwünscht ist.

Aus diesem Grunde werden bereits heute z.B. für die Befestigung von begehbaren Plattformen der Turminnenwand spezielle Anbauelemente in Form von sogenannten Einschweißhülsen verwendet.

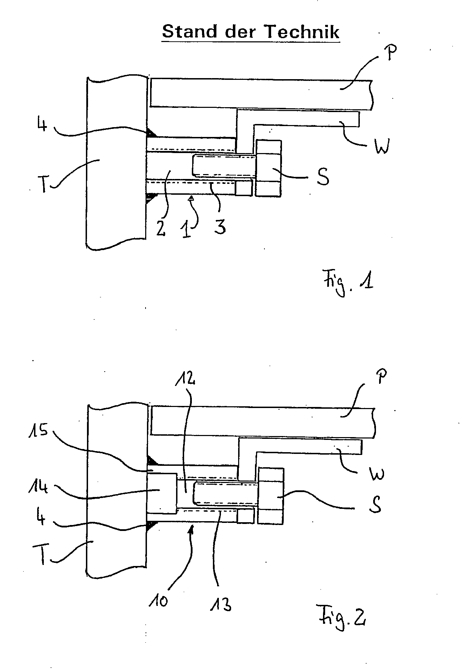

Eine solche Verbindung gemäß dem Stand der Technik ist in Fig. 1 dargestellt. Eine Einschweißhülse 1 ist ein im Wesentlichen zylinderförmiges Element mit einer zentralen Bohrung 2 gleichbleibenden Durchmessers. Die zentrale Bohrung 2 ist mit einem Innengewinde 3 versehen. Diese Einschweißhülse 1 wird mit einer Stirnseite an die Turmwand T angesetzt und unter Anbringung einer Schweißnaht 4 mit der Turmwand T verschweißt. Dieses Verschweißen erfolgt mittels Materialeintrages, z.B. über einen Schweißdraht. An der der Schweißnaht 4 gegenüberliegenden Stirnseite der Einschweißhülse 1 kann nun ein Winkel W mittels einer Schraube S an einem ersten Schenkel festgelegt werden. Auf dem zweiten, zu dem ersten Schenkel im Wesentlichen rechtwinkligen Schenkel des Winkels W wird dann ein Anbauteil, z.B. eine Plattform P abgelegt und mit dem Winkel W in geeigneter Weise verbunden, z.B. verschweißt, verschraubt, vernietet oder dgl.

Eine solche Bauweise birgt den Vorteil, dass insbesondere Spitzenlasten, die auf dem Anbauteil, z.B. der Plattform P lasten und ausgehend von dieser über die Verbindungskonstruktion in die Turmwand T eingeleitet werden, nicht vollständig auf der Turmwand T lasten, sondern durch die Flexibilität des Winkels W abgeschwächt und abgefangen werden. Die so an der Schweißnaht 4 entstehende Schwächung der Turmwand T ist geringer, als in einem Fall, in dem z.B. die Plattform P unmittelbar mit der Turmwand T verschweißt worden wäre.

Eine solche Konstruktion hat sich in der Anwendung bewährt, und es war nach DIN zulässig, für die Berechnung der Turmwand an der Verbindungsstelle der Schweißnaht 4 eine Kerbfallklasse 90 anzunehmen.

In der neueren Entwicklung hat sich jedoch gezeigt, dass diese Abnahme nicht ohne weiteres möglich ist, und es wurde insbesondere im Rahmen einer neuen Europanorm, der Norm EN1993-1-9 eine Änderung festgelegt. Dort ist in Tabelle 8.4 letzte Zeile nunmehr geregelt, dass bei einer solchen Verbindung nicht mehr ohne weiteres mit einer Kerbfallklasse 90, sondern regelmäßig vielmehr mit einer Kerbfallklasse 80 zu rechnen ist. Dies zieht jedoch nach sich, dass bei der Auslegung des Turmes die Turmwand T entsprechend stärker zu dimensionieren ist mit den oben aufgezeigten Folgen und Nachteilen. Die genannte europäische Norm gestattet es jedoch, mit einer besseren Kerbfallklasse zu rechnen, sofern eine solche tatsächlich nachgewiesen werden kann. Eine solche kann nur dann nachgewiesen werden, wenn die Einleitung von Lasten, insbesondere Spitzenlasten eines mit der Turminnenwand über ein entsprechendes Anbauelement verbundenen Anbauteils noch besser abgefangen wird und die Lasten nicht in die Turmwand bzw. in die Verbindung der Schweißnaht 4 eingeleitet werden.

In der vorveröffentlichten EP 1 060 826 A1 sind allgemein formgeprägte Schweißelemente beschrieben, die ganz unterschiedliche Konturverläufe aufweisen. Diese Schweißelemente sind für eine Verbindung zu Werkstücken oder Bauteilen mittels Reibschweißens vorgesehen. Eine Verwendung für die Festlegung an einer metallenen Turminnenwand einer Windenergieanlage ist dort als mögliche Anwendung ebenso wenig erwähnt wie eine mögliche Veränderung der Kerbfallklasse einer solchen Verbindung durch Verwendung der dort gezeigten Schweißelemente. In der EP 1 623 116 B1 sind Elemente für die Festlegung an einer metallenen Turminnenwand einer Windenergieanlage gezeigt, die dort mittels von in den Elementen angeordneten Permanentmagneten ausgeübter Magnetkräfte halten. Eine Schweißverbindung solcher Elemente mit der Turminnenwand ist dort ebenso wenig beschrieben wie eine Einstufung der Verbindung in eine Kerbfallklasse.

### Darstellung der Erfindung

Entsprechend ist es Aufgabe, eine Einrichtung mit den Merkmalen des Oberbegriffs des Patentanspruches 1 zu finden, welche eine geringere Belastung der zwischen dem in dieser verwendeten Anbauelement und der Turmwand bestehenden Schweißverbindung und damit die Einordnung dieser Verbindungsstelle in eine höhere Kerbfallklasse ermöglicht.

Es hat sich herausgestellt, dass diese Aufgabe gelöst werden kann durch eine Einrichtung zum Festlegen von Anbauteilen an einer metallenen Tunninnenwand eines Turmes einer Windenergieanlage mit den Merkmalen des Patentanspruches 1. Vorteilhafte Weiterbildungen einer solchen Einrichtung sind in den abhängigen Ansprüchen 2 bis 6 angegeben. Anspruch 7 bezeichne eine Verwendung eines Anbauelements der erfindungsgemäß vorzusehenden Ausprägung zum Festlegen eines Anbauteils an einer metallenen Turminnenwand eines Turms einer Windenergieanlage. In Anspruch 8 ist schließlich ein verbesserter Turm einer Windenergieanlage bezeichnet, an dem an seiner Innenwand wenigstens eine Einrichtung der erfindungsgemäßen Art mit an der Turminnenwand angeschweißtem Anbauelement ist.

Die wesentliche Erkenntnis der Erfindung besteht darin, dass eine flexible Aufnahme von insbesondere auftretenden Spitzenlasten durch ein erfindungsgemäß verwendetes Anbauelement und Abhalten des Eintrages dieser Lasten in die Schweißverbindung zur Turminnenwand gegeben ist, wenn im Bereich der ersten, an der Turminnenwand anzuschweißenden Stirnseite dieses Anbauelementes letzteres im Querschnitt eine gesamte Materialstärke aufweist, die geringer ist als eine gesamte Materialstärke in einem in Richtung der zweiten Stirnseite verschobenen Querschnitt.

Durch eine solche Verringerung der Gesamtmaterialstärke wird eine gezielte Schwächung des Anbauelementes im Bereich der Verbindung zu der Turminnenwand geschaffen, die dem Anbauelement ein Maß an Flexibilität verleiht, welches in der erfindungsgemäßen Einrichtung dann in der Lage ist, insbesondere Spitzenlasten aufzunehmen bzw. abzufedern, wodurch diese Spitzenlasten nicht in die Schweißverbindung zwischen dem Anbauelement und der Turminnenwand eingeleitet werden. Auf diese Weise lässt sich also die Belastung der Turminnenwand im Bereich der Schweißverbindung bzw. der Schweißverbindung selbst reduzieren, so dass eine Erhöhung und insoweit Verbesserung der tatsächlichen Kerbfallklasse erzielt werden kann. Bei entsprechender Auslegung, dies haben die Erfinder nachgewiesen, kann so anstelle mit der nach der Europanorm im Regelfall geforderten Kerbfallklasse 80 mit einer Kerbfallklasse 90 für den Punkt der Schweißverbindung mit der Turminnenwand gerechnet werden. Entsprechend kann die Auslegung der Stärke der Turmwand geringer ausfallen mit den damit verbundenen Vorteilen der Materialeinsparung und weiteren Kostenerspamismöglichkeiten.

Das Anbauelement kann dabei jedwede mögliche Form aufweisen, es kann anders als im Stand der Technik nicht hülsenförmig, sondern im Wesentlichen massiv sein oder mit von einer oder beiden Stirnseiten her eingebrachten Sackbohrungen. Der Außendurchmesser des Anbauelementes kann gleichbleibend durchgehend, das Anbauelement auch zylindrisch, sein; ebenso gut kann sich der Außendurchmesser verändern, beispielsweise einen Versatz aufweisen. Wichtig ist lediglich, dass verglichen mit einer im Querschnitt im Bereich der ersten Stirnseite insgesamt vorhandene Materialstärke in Richtung der zweiten Stirnseite ein Querschnitt vorhanden ist, der eine höhere bzw. größere Materialstärke insgesamt aufweist als die Gesamtmaterialstärke im Bereich des Querschnittes der ersten Stirnseite.

An dem Anbauelement können in der erfindungsgemäßen Einrichtung die festzulegenden Anbauteile in beliebiger Weise festgelegt werden. Sie können entweder unmittelbar auf dem Anbauelement auflasten oder über zwischen gelegte Elemente, wie die im Stand der Technik benutzten Winkel. Das an dem Anbauelement selbst zu befestigende Teil kann mit diesem verschraubt, verschweißt oder in sonstiger Weise verbunden sein.

Um eine Kompatibilität mit den bisher als Standardteile verwendeten Einschweißhülsen und den weiteren Verbindungselementen zum Anbau der Anbauteile zu gewährleisten, ist es zu bevorzugen, das erfindungsgemäß in der neuen Einrichtung verwendete Anbauelement soweit als möglich in Übereinstimmung mit den vorbekannten Einschweißhülsen auszubilden. So können insbesondere die Außenabmessungen von der ersten bis zur zweiten Stirnseite durchgehend gleich bleiben, und das Anbauelement kann eine durchgehende Längsbohrung aufweisen. Diese Längsbohrung ist mit Vorteil in einem Bereich der ersten Stirnseite mit einem Abschnitt mit erweitertem Durchmesser versehen. Dieser erweiterte Durchmesser ist mit besonderem Vorteil über wenigstens 1/3 der als Abstand von der ersten Stirnseite zur zweiten Stirnseite gemessenen Gesamtlänge des Anbauteils geführt. Durch eine solche vergleichsweise lange Führung der erweiterten Bohrung im Bereich der ersten Stirnseite wird die gewünschte zusätzliche Flexibilität zum Abfangen von Spitzenlasten besonders zuverlässig erhalten.

Auf der zweiten Stirnseite kann ein erfindungsgemäß verwendetes Anbauelement mit Vorteil ein Innengewinde aufweisen, in welches eine für diese Verbindungstechnik übliche Schraube geführt werden kann.

### Kurze Beschreibung der Zeichnungen

Weitere Vorteile und Merkmale der Erfindung ergeben sich aus der nachfolgenden Beschreibung eines Ausführungsbeispiels anhand der Figuren. In den Figuren zeigen:
Fig. 1 schematisch eine Anbaukonstruktion zum Festlegen eines Anbauteils an der Innenwand des Turmes einer Windenergieanlage mit einer Einschweißhülse gemäß dem Stand der Technik;
Fig. 2 in einer vergleichbaren Darstellung wie Fig. 1 eine solche Konstruktion mit einem erfindungsgemäßen Anbauelement in einer möglichen Ausgestaltung;
Fig. 3 in einer Darstellung eine Wandung eines in einer erfindungsgemäßen Anbaukonstruktion gemäß Fig. 2 verwendeten Anbauelementes mit Bemaßungsangaben und der Festlegung an einer Turminnenwand; und
Fig. 4 weitere Ausgestaltungsmöglichkeiten für in erfindungsgemäßer Weise verwendbare Anbauelemente in ihrer Anordnung an der Turminnenwand einer Windenergieanlage.

### Weg(e) zur Ausführung der Erfindung

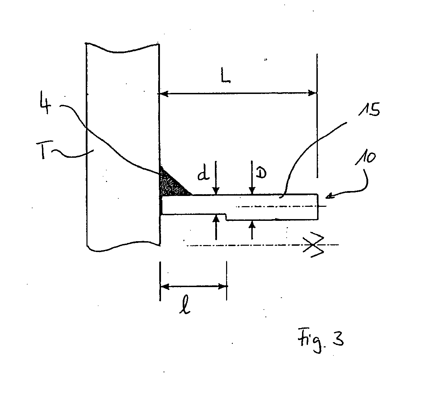

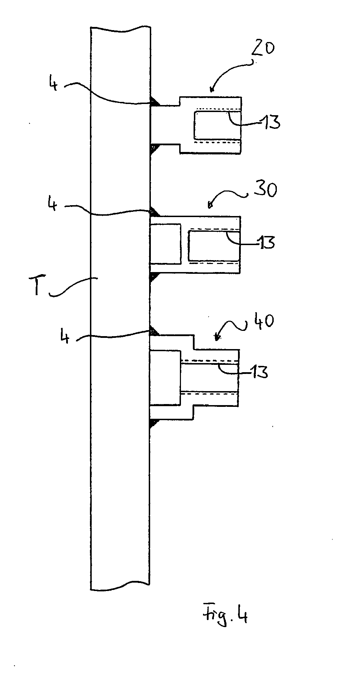

Die eingangs bereits zum Stand der Technik diskutierte Figur 1 zeigt eine bekannte Anbindung an einen Turm. Die Figuren 2 und 3 zeigen ein erstes Ausführungsbeispiel für ein erfindungsgemäßes Anbauelement, in Fig. 4 sind weitere mögliche Varianten dargestellt.

Das in den Figuren 2 und 3 gezeigte erste Ausführungsbeispiel einer Einrichtung zum Festlegen von Anbauteilen an einer metallenen Turminnenwand eines Turms einer Windenergieanlage unter erfindungsgemäßer Verwendung eines wie oben bereits erläutert gebildeten Anbauelementes 10 ist im Wesentlichen ähnlich gebildet wie die aus dem Stand der Technik bekannte Einrichtung mit einer Einschweißhülse 1. Auch bei der erfindungsgemäßen Einrichtung ist das Anbauelement 10 im Wesentlichen zylindrisch aufgebaut mit einer im Querschnitt vorzugsweise kreisförmigen Außenkontur. Es weist über seine Länge gleichbleibende Außenabmessungen auf sowie eine im Inneren in Längsrichtung des Anbauelementes 10 geführte zentrale Bohrung. Auf Seiten einer ersten Stirnseite, an der das Anbauelement 10 über eine Schweißnaht 4 mit der Turmwand T verbunden ist bzw. im noch nicht eingebauten Zustand zur Verbindung dieser Art vorgesehen ist, ist die zentrale Bohrung 12 in einem Abschnitt 14 mit einer Erweiterung versehen und weist hier also einen größeren Durchmesser auf. Dadurch ist aber auch die Wandung 15 in diesem Abschnitt gegenüber der Stärke außerhalb dieses Abschnittes geschwächt und von geringerer Stärke. Die Gesamtstärke der Wandung in einem Querschnitt ist also geringer als in einem in Richtung des der ersten Stirnseite gegenüberliegenden Endes des Einbauelementes 10 verschobenen Querschnitt durch einen Bereich, in dem die Bohrung 12 den geringeren Durchmesser aufweist.

Im Bereich der zweiten, der ersten Stirnseite gegenüberliegenden Stirnseite ist die zentrale Bohrung 12 mit einem Innengewinde 13 versehen zum Einschrauben einer wie auch im Stand der Technik verwendeten Schraube S.

Die Schweißnaht 4 erstreckt sich außen um die äußere Wandung des Anbauelementes 10 herum und ist in einem klassischen Schweißverfahren mit Materialeintrag (z.B. mittels eines Schweißdrahtes) hergestellt.

In Fig. 2 ist das erfindungsgemäß verwendete Anbauelement 10 in einer zum Stand der Technik vergleichbaren Konstruktion mit einem an dem Anbauelement 10 angeschraubten Winkelelement W und der darauf abgelegten Plattform P gezeigt. Selbstverständlich können hier auch andere Befestigungsmethoden gewählt werden. Entscheidend ist, dass durch die gezielte Schwächung des Materials des Anbauelementes 10 im Bereich der ersten Stirnseite in der Verbindungsstruktur eine höhere Flexibilität geschaffen ist, die den Steifigkeitssprung in der Sturmschale reduziert und damit die Einteilung in eine höhere Kerbfallklasse rechtfertigt.

In Fig. 3 ist in vergrößerter Darstellung der erfindungsgemäßen Einrichtung mit dem für die Umsetzung wesentlichen Anbauelement 10 lediglich ein Abschnitt der Wandung 15 des erfindungsgemäßen Anbauelementes 10 gezeigt, wie letzteres bei einer Schweißnaht 4 an der Turmwand T festgelegt ist. In der Figur sind diverse Abmessungen als Größen eingetragen, so die Gesamtlänge L des Anbauelementes 10 und die Länge 1 des Abschnittes mit erweiterter Bohrung. Ferner sind dort eingetragen die Wandungsdicke D im Bereich mit der nicht erweiterten Bohrung sowie die reduzierte Wandungsdicke d im Bereich der erweiterten Bohrung.

In einem Ausführungsbeispiel beträgt die Gesamtlänge L eines verwendbaren Anbauelementes 10 z.B. 35 mm, die Länge 1 des Abschnittes mit erweiterter Bohrung 15 mm. Der Außendurchmesser des im Querschnitt kreisförmigen Anbauelementes 10 beträgt 30 mm, im Bereich der der Schweißnaht 4 gegenüberliegenden Stirnseite ist in der nicht erweiterten Bohrung ein Innengewinde M 16 eingebracht. Die Wandungsdicke D beträgt insoweit in etwa 7 mm, die reduzierte Wandungsdicke d ist in diesem Ausführungsbeispiel bei 5 mm festgelegt.

Diese Bemaßungen und Werte können natürlich variieren abhängig vom Einsatzzweck.

In Fig. 4 schließlich sind weitere Beispiele für erfindungsgemäß einsetzbare Anbauelemente 20, 30 und 40 gezeigt, wie sie an einer Turminnenwand T über Schweißnähten 4 festgelegt sind, die ebenfalls mittels eines klassischen Schweißverfahrens mit Materialeintrag hergestellt sind und sich außen um die äußere Wandung des jeweiligen Anbauelementes 20, 30, 40 herum erstrecken. Allen hier gezeigten weiteren Anbauelementen 20, 30 und 40 gemein ist eine auf der der Turmwand abgelegenen zweiten Stirnseite eingebrachte Bohrung mit einem Innengewinde 3. In diesem können in der üblichen Weise Schrauben aufgenommen werden.

Ferner weisen sämtliche der gezeigten Anbauelemente 20, 30 und 40 einen an der ersten, über die Schweißnaht 4 an der Turmwand T festgelegten Stirnseite einen Querschnitt mit gegenüber einem Vergleichsquerschnitt, der in Richtung der zweiten Stirnseite verschoben ist, geringeren Gesamtmaterialstärke auf und haben so in diesem Bereich eine erhöhte Flexibilität. Während bei dem Ausführungsbeispiel eines Anbauelementes 20 diese Materialausdünnung durch eine Reduzierung des Außendurchmessers erzielt worden ist, ist das Anbauelement 30 sehr ähnlich wie das Anbauelement 10 gestaltet. Bei dem Anbauelement 30 ist lediglich die Bohrung im Inneren nicht durchgeführt. Das Anbauelement 40 weist einen sich zwar zur ersten Stirnseite hin vergrößernden Außendurchmesser auf, ist jedoch im Bereich dieser ersten Stirnseite mit einer deutlich erweiterten Bohrung versehen, so dass auch hier eine Materialausdünnung erhalten ist, die zu einer Erhöhung der Flexibilität führt.

Grundsätzlich sind auch noch weitere Ausführungsformen denkbar. Es wird jedoch die Ausführungsform des Anbauelementes 10 bevorzugt, insbesondere da diese leicht und einfach herzustellen ist. Nach dem Einbringen der Längsbohrung muss diese in lediglich einem einzigen Arbeitsschritt auf Seiten der ersten Stirnseite erweitert werden, typischerweise in einem spanenden Vorgang z.B. durch Bohren oder Drehen.

Eine Veränderung des Außendurchmessers, wie dies die Anbauelemente 20 und 40 erfordern, zieht einen höheren Bearbeitungsaufwand nach sich.

Auch aus der vorangehenden Beschreibung der Ausführungsbeispiele dürfte noch einmal klar geworden sein, dass mit der erfindungsgemäßen Einrichtung und der Verwendung des besonderen Anbauelementes sowie der damit verbundenen Möglichkeit, die Steifigkeit der Verbindung mit der Turminnenwand und damit insbesondere den Eintrag von Stoß- bzw. Spitzenlasten zu reduzieren, ein erheblicher Vorteil bei der Auslegung und Dimensionierung der Turmwand und Bestimmung insbesondere der Wandstärke verbunden ist, der sich Material sparend und auch in sonstiger Weise wirtschaftlich äußert.

### Bezugszeichenliste

- 1: Einschweißhülse
- 2: zentrale Bohrung
- 3: Innengewinde
- 4: Schweißnaht
- 10: Anbauelement
- 12: zentrale Bohrung
- 13: Innengewinde
- 14: Abschnitt
- 15: Wandung
- 20: Anbauelement
- 30: Anbauelement
- 40: Anbauelement
- d: reduzierte Wandungsdicke
- D: Wandungsdicke
- l: Länge des Abschnittes mit erweiterter Bohrung
- L: Gesamtlänge
- P: Plattform
- S: Schraube
- T: Turmwand
- W: Winkelelement

## Patentansprüche

1. Einrichtung zum Festlegen von Anbauteilen (P) an einer metallenen Turminnenenwand (T) einer Windenergieanlage mit einem mit einer ersten Stirnseite an der Turminnenwand (T) angeschweißten Anbauelement (10, 20, 30, 40), welches eine zweite, der ersten Stirnseite gegenüberliegende Stirnseite zum Festlegen eines Anbauteils (P) aufweist, **dadurch gekennzeichnet, dass** das Anbauelement im Bereich der ersten Stirnseite im Querschnitt eine gesamte Materialstärke aufweist, die gegenüber einer gesamten Materialstärke in einem in Richtung der zweiten Stirnseite verschobenen Querschnitt reduziert ist.

2. Einrichtung nach Anspruch 1, **dadurch gekennzeichnet, dass** das Anbauelement (10, 30) von der ersten bis zur zweiten Stirnseite durchgehend gleichbleibende Außenabmessungen und eine von der ersten Stirnseite in Längsrichtung in das Material geführte Bohrung (12) aufweist.

3. Einrichtung nach Anspruch 2, **dadurch gekennzeichnet, dass** das Anbauelement (10) hülsenförmig gebildet ist mit einer von der ersten Stirnseite zu der zweiten Stirnseite durchgehenden Längsbohrung (12), wobei diese im Bereich der ersten Stirnseite einen Abschnitt (14) mit erweitertem Durchmesser aufweist.

4. Einrichtung nach Anspruch 3, **dadurch gekennzeichnet, dass** sich in dem Anbauelement (10) der Abschnitt (14) der Längsbohrung (12) mit erweitertem Durchmesser über wenigstens ein Drittel der als Abstand von der ersten Stirnseite zu der zweiten Stirnseite gemessenen Gesamtlänge (L) des Anbauelementes (10) erstreckt.

5. Einrichtung nach einem der vorhergehenden Ansprüche, **dadurch gekennzeichnet, dass** das Anbauelement (10, 20, 30, 40) auf der zweiten Stirnseite ein Innengewinde (13) aufweist.

6. Einrichtung nach einem der vorhergehenden Ansprüche, **dadurch gekennzeichnet, dass** das Anbauelement (10, 20, 30, 40) zylinderförmig ist.

7. Verwendung eines eine erste Stirnseite und eine zweite, der ersten Stirnseite gegenüberliegende und mit Mitteln (13) zum Festlegen eines Anbauteils (P) versehene Stirnseite aufweisenden Anbauelementes (10, 20, 30, 40), welches im Bereich der ersten Stirnseite im Querschnitt eine gesamte Materialstärke aufweist, die gegenüber einer gesamten Materialstärke in einem in Richtung der zweiten Stirnseite verschobenen Querschnitt reduziert ist, zur Festlegung von Anbauteilen (P) an einer metallenen Turminnenwand (T) eines Turmes einer Windenergieanlage durch Anschweißen des Anbauelementes (10, 20, 30, 40) mit seiner ersten Stirnseite an der Turminnenwand (T).

8. Turm einer Windenergieanlage mit einer metallenen Turminnenwand (T), **dadurch gekennzeichnet, dass** an der Turminnenwand (T) eine Einrichtung zum Festlegen von Anbauteilen (P) nach einem der Ansprüche 1 bis 6 angeordnet ist.

## Claims

1. A device for fixing construction parts (P) to a metallic tower inner wall (T) of a wind power plant with one construction element (10, 20, 30, 40) welded to the tower inner wall (T) with a first front face, which contains a second front face, opposite the first front face, for fixing a construction part (P), **characterised in that** the construction element has in the region of the first front face in its cross-section a total material thickness which is reduced with respect to a total material thickness in a cross-section shifted in the direction of the second front face.

2. The device according to claim 1, **characterised in that** the construction element (10, 30) has constant and continuous external dimensions from the first front face to the second front face and a bore (12) guided into the material from the first front face in longitudinal direction.

3. The device according to claim 2, **characterised in that** the construction element (10) is designed in the form of a sleeve with a longitudinal bore (12) continuous from the first front face to the second front face, whereas said bore has a section (14) with increased diameter in the region of the first front face.

4. The device according to claim 3, **characterised in that** the section (14) of the longitudinal bore (12) with increased diameter extends in the construction element (10) over at least one third of the total length (L) of the construction element (10) as the distance from the first front face to the second front face.

5. The device according to any one of the preceding claims, **characterised in that** the construction element (10, 20, 30, 40) has an internal thread (13) on the second front face.

6. The device according to any one of the preceding claims, **characterised in that** the construction element (10, 20, 30, 40) is cylindrical.

7. Use of a construction element (10, 20, 30, 40) having a first front face and a second front face, opposite the first front face and fitted with means (13) for fixing a construction part, which has in the region of the first front face in its cross-section a total material thickness which is reduced with respect to a total material thickness in a cross-section shifted in the direction of the second front face, for fixing construction parts (P) to a metallic tower inner wall (T) of a tower of a wind power plant by welding the construction element (10, 20, 30, 40) to the tower inner wall (T) with a first front face.

8. The tower of a wind power plant with a metallic tower inner wall (T), **characterised in that** a device for fixing construction parts (P) according to one of the claims 1 to 6 is arranged on the tower inner wall (T).

## Revendications

1. Dispositif de fixation de pièces de construction (P) sur une paroi interne de tour métallique (T) d'une installation éolienne avec un élément de construction (10, 20, 30, 40) soudé à un première face frontale au niveau de la paroi interne de tour (T), qui présente une seconde face frontale opposée à la première face frontale pour fixer une pièce de construction (P), **caractérisé en ce que** l'élément de construction présente une épaisseur totale de matériau dans la zone de la première face frontale en coupe transversale, qui est réduite par rapport à une épaisseur totale de matériau en coupe transversale décalée dans le sens de la seconde face frontale.

2. Dispositif selon la revendication 1, **caractérisé en ce que** l'élément de construction (10, 30) présente des dimensions externes constantes d'un bout à l'autre de la première face frontale à la seconde face frontale et un alésage (12) pratiqué dans le matériau à partir de la première face frontale dans l'axe longitudinal.

3. Dispositif selon la revendication 2, **caractérisé en ce que** l'élément de construction (10) est en forme de douille avec un alésage longitudinal (12) continu de la première face frontale à la seconde face frontale, tandis que ledit alésage présente une section (14) au diamètre agrandi dans la zone de la première face frontale.

4. Dispositif selon la revendication 3, **caractérisé en ce que** la section (14) de l'alésage longitudinal (12) au diamètre agrandi s'étend dans l'élément de construction (10) sur au moins un tiers de la longueur totale (L) de l'élément de construction (10), longueur mesurée comme la distance allant de la première face frontale à la seconde face frontale.

5. Dispositif selon l'une des revendications précédentes, **caractérisé en ce que** l'élément de construction (10, 20, 30, 40) présente un filet interne (13) sur la seconde face frontale.

6. Dispositif selon l'une des revendications précédentes, **caractérisé en ce que** l'élément de construction (10, 20, 30, 40) est en forme de cylindre.

7. Utilisation d'un élément de construction (10, 20, 30, 40) comprenant une première face frontale et une second face frontale opposée à la première face frontale et pourvue de moyens (13) de fixation d'une pièce de construction (P), qui présente une épaisseur totale de matériau dans la zone de la première face frontale en coupe transversale qui est réduite par rapport à une épaisseur totale de matériau en coupe transversale décalée dans le sens de la seconde face frontale, pour fixer des pièces de construction (P) sur une paroi interne de tour métallique (T) d'une tour d'une installation éolienne par soudage de l'élément de construction (10, 20, 30, 40) à un première face frontale au niveau de la paroi interne de tour (T).

8. Tour d'une installation éolienne avec une paroi interne de tour métallique (T), **caractérisée en ce qu'**un dispositif de fixation de pièces de construction (P) selon l'une quelconque des revendications 1 à 6 est agencé au niveau de la paroi interne de tour (T).
